# EUROPEAN PATENT SPECIFICATION

(11) **EP 4 498 447 B1**
(45) Date of publication and mention of the grant of the patent: **09.07.2025**
(21) Application number: 24152493.3
(22) Date of filing: 17.01.2024
(51) Int. Cl.: H01M 4/1397, H01M 4/04, C08F 212/08, C08F 220/20, C08F 283/06, H01M 4/136, H01M 4/62, C08F 212/12, C08F 290/06, H01M 4/02

(54) **PREPARATION METHOD OF COMB-SHAPED POSITIVE ELECTRODE DISPERSING MATERIAL AND PREPARATION METHOD OF LOW-INTERNAL-RESISTANCE ELECTRODE PLATE**
HERSTELLUNGSVERFAHREN FÜR KAMMFÖRMIGES POSITIVELEKTRODENDISPERSIONSMATERIAL UND HERSTELLUNGSVERFAHREN FÜR ELEKTRODENPLATTE MIT NIEDRIGEM INTERNEM WIDERSTAND
PROCÉDÉ DE PRÉPARATION D'UN MATÉRIAU DE DISPERSION D'ÉLECTRODE POSITIVE EN FORME DE PEIGNE ET PROCÉDÉ DE PRÉPARATION D'UNE PLAQUE D'ÉLECTRODE À FAIBLE RÉSISTANCE INTERNE

(30) Priority: 28.07.2023 CN 202310934119
(43) Date of publication of application: 29.01.2025
(73) Proprietor: Jiangsu Yite New Material Co., Ltd, Changzhou Jiangsu 213031 (CN)
(72) Inventor: WANG, Zhengzheng, Jiangsu, 213031 (CN); HAO, Ruiwen, Jiangsu, 213031 (CN); QI, Wengang, Jiangsu, 213031 (CN); GENG, Yuekai, Jiangsu, 213031 (CN)
(74) Representative: HGF

(56) References cited:
- CN-A- 102 585 082
- CN-A- 103 084 119
- CN-A- 107 501 479
- DONG YARUI ET AL: "Effect of comb polymer dispersants with different molecular structures on the performance of LiFePO 4 suspensions", JOURNAL OF DISPERSION SCIENCE AND TECHNOLOGY., vol. 45, no. 6, 21 July 2023 (2023-07-21), NEW YORK, NY, US, pages 1241 - 1250, XP093183807, ISSN: 0193-2691, DOI: 10.1080/01932691.2023.2204152

## Description

### CROSS-REFERENCE TO RELATED APPLICATION

The present application claims priority from Chinese Patent Application No. 202310934119.5 filed on July 28, 2023.

### TECHNICAL FIELD

The present invention belongs to the technical field of battery dispersing materials, and particularly relates to a preparation method of a comb-shaped positive electrode dispersing material and a preparation method of a low-internal-resistance electrode plate.

### BACKGROUND

A lithium-ion battery is mainly composed of a positive electrode, a negative electrode, an electrolyte and a diaphragm, wherein the preparation of an electrode plate is a first step in a manufacturing process of the lithium-ion battery, and the quality of the electrode plate is related to a yield of the lithium-ion battery. The preparation of the electrode plate is divided into the steps of slurry stirring, electrode plate coating, rolling cutting and the like, and the slurry stirring is the key step. As for the electrode plate, a slurry is generally composed of a positive electrode material, a binder, a conductive agent, a solvent and the like. With increasing pressures in environmental protection, cost and other aspects, the market is now pursuing a slurry with a higher solid content to reduce the use of an NMP solvent, which also brings great difficulties to slurry dispersion and coating, and the introduction of a positive electrode dispersing material can effectively solve the above problems. However, there are a few of choices on the market at present, the industry has just started, and related patents are rarely disclosed. Moreover, the preparation of the electrode plate still has the problems of cracking, powder falling and uneven coating of the electrode plate at present, so that higher requirements for the positive electrode dispersing material are put forward. It is worth noting that the introduction of the dispersing material may have a negative impact on increase of internal resistance of the electrode plate, the internal resistance of the electrode plate is related to an energy density of the lithium-ion battery, and the relatively high internal resistance of the electrode plate can reduce the energy density, which is not conducive to the promotion and application of products. It is urgent to develop a novel positive electrode dispersing material, which can give consideration to both advantages of good dispersion effect and small internal resistance of the electrode plate.

The comb copolymers of XP093183807, namely poly(2-(dimethylamino)ethyl methacrylate (DMAEMA)-co-methacrylic acid (MAA)-co-methoxy polyethylene glycol methacrylate (MPEGMA)) (poly(DMAEMA-MAAMPEGMA, DMM) were synthesized and used as N-methyl-2-pyrolidinone (NMP)-based lithium iron phosphate (LFP) suspension dispersants.

Therefore, it is necessary to develop a preparation method of a comb-shaped positive electrode dispersing material and a preparation method of a low-internal-resistance electrode plate to solve the problems of a poor effect of the dispersing material and a high internal resistance of the electrode plate.

### SUMMARY

The present invention aims to provide a preparation method of a comb-shaped positive electrode dispersing material and a preparation method of a low-internal-resistance electrode plate.

A technical solution of the present invention is as follows.

A preparation method of a comb-shaped positive electrode dispersing material comprises the following steps of:
(1) mixing a solvent, an unsaturated cyclic monomer, unsaturated branched polyether and a (methyl) acrylate monomer to obtain a mixed solution, wherein the solvent is any one or two of N-methylpyrrolidone and N-ethylpyrrolidone; the unsaturated cyclic monomer is any one or more of styrene, methylstyrene, vinylpyridine and N-vinylpyrrolidone; an initiator of the unsaturated branched polyether is any one of allyl alcohol, isobutylene alcohol and isopentenol, a participating chain segment of the unsaturated branched polyether is a copolymer of ethylene oxide and propylene oxide, a molecular weight of the unsaturated branched polyether ranges from 500 g/mol to 5000g/mol, and the (meth) acrylate monomer is any one or more of hydroxyethyl methylacrylate, hydroxypropyl methacrylate, hydroxybutyl methacrylate, hydroxyethyl acrylate, hydroxypropyl acrylate and hydroxybutyl acrylate;
(2) heating the mixed solution to a reaction temperature, adding an initiating agent, and keeping the reaction temperature for reaction to obtain a semi-finished product; and
(3) adding phosphoric acid which is equal to the (methyl) acrylate monomer in mole into the semi-finished product for esterification and high-temperature dehydration to obtain the comb-shaped positive dispersing material.

Further, in the step (1), a mass ratio of the unsaturated cyclic monomer to the unsaturated branched polyether and the (methyl) acrylate monomer is 2 to 4: 4 to 7: 1 to 2.

Further, in the step (2), the initiating agent is any one or more of azodiisobutyronitrile, azodiisoheptylnitrile and dibenzoyl peroxide; and according to a mass percentage, an amount of the initiating agent accounts for 0.1% to 3% of a sum of amounts of the unsaturated cyclic monomer, the unsaturated branched polyether and the (methyl) acrylate monomer.

Further, in the step (2), the reaction temperature is 60°C to 90°C, and the reaction lasts for 2 hours to 10 hours.

Further, in the step (3), the esterification is carried out at a temperature of 70°C, and the esterification lasts for 3 hours to 6 hours.

Further, in the step (3), a molecular weight of the comb-shaped positive electrode dispersing material ranges from 10,000 g/mol to 60,000 g/mol.

Another technical solution of the present invention is as follows.

A preparation method of a low-internal-resistance electrode plate comprises the following steps of:
(1) uniformly mixing the comb-shaped positive electrode dispersing material, lithium iron phosphate, conductive carbon black, polyvinylidene fluoride and N-methylpyrrolidone, and dispersing the mixture by a vacuum defoamer to obtain a positive electrode slurry; and
(2) pouring the positive electrode slurry on a spread plate machine for electrode plate coating to obtain the low-internal-resistance electrode plate.

Further, in the step (1), a mass ratio of the lithium iron phosphate to the conductive carbon black, the polyvinylidene fluoride, the N-methylpyrrolidone and the comb-shaped positive electrode dispersing material is 95: 2: 2: 66: 1.

Further, in the step (2), an areal density of the low-internal-resistance electrode plate ranges from 150 g/m² to 200g/m².

The present invention provides the preparation method of the comb-shaped positive electrode dispersing material and the preparation method of the low-internal-resistance electrode plate, and has the beneficial effects as follows:
(1) the comb-shaped positive electrode dispersing material prepared by the method of the present invention has is simple in synthesis step and easy to operate, and is conductive to large-scale industrial production;
(2) the comb-shaped positive electrode dispersing material prepared by the method of the present invention is a comb-shaped macromolecule, a phosphate group on a main chain has a certain adsorption effect on positive electrode slurry particles, and a macromolecular polyether chain on a side chain may provide a strong steric hindrance effect, so that a dispersion effect is obviously better than that of an existing dispersing material;
(3) the comb-shaped positive electrode dispersing material prepared by the method of the present invention can increase a solid content of a lithium iron phosphate positive electrode slurry to 60wt%, so that a viscosity of the material is greatly reduced compared with a blank sample, and viscosity stability of the material is ensured, and the viscosity is increased by about 10% after standing for 72 hours, which is conductive to a subsequent electrode plate coating process;
(4) the electrode plate prepared by the method of the present invention has a high coating yield, and the battery slurry with a lower viscosity and higher stability is easy to be coated at a high speed, so that coating efficiency can be improved, and the coated electrode plate is flat and smooth in surface and free of cracking and powder falling; and
(5) compared with a contrast sample, the internal resistance of the electrode plate prepared by the method of the present invention is obviously reduced, because an excellent dispersion ability of the dispersing material enables conductive components and iron and lithium in the slurry to be uniformly dispersed, and the flat and smooth surface and no cracking of the electrode plate can also lead to further reduction of the internal resistance of the electrode plate, and the low internal-resistance electrode plate is conductive to improving an overall energy density of the battery.

### BRIEF DESCRIPTION OF THE DRAWINGS

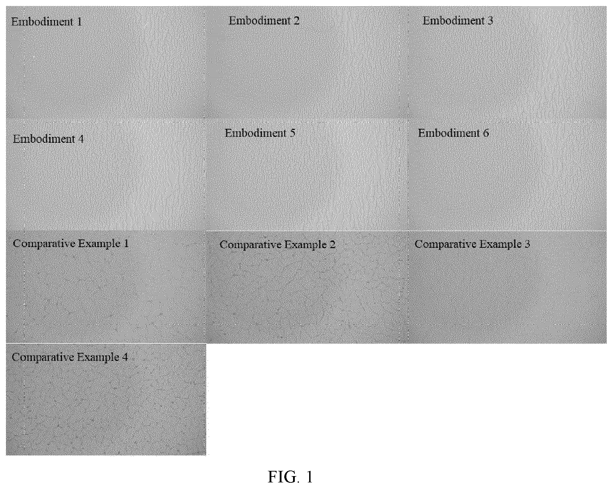

FIG. 1 shows pictures of surfaces of electrode plates prepared in Embodiments 1 to 6 and Comparative Examples 1 to 4 by a preparation method of a low-internal-resistance electrode plate according to the present invention.

### DETAILED DESCRIPTION

In order to give consideration to both advantages of good dispersion effect and small internal resistance of an electrode plate, the present invention provides a preparation method of a comb-shaped positive electrode dispersing material with high dispersion and a low internal resistance, which comprises the following steps.

In step 1), a solvent, an unsaturated cyclic monomer, unsaturated branched polyether and a (methyl) acrylate monomer are mixed to obtain a mixed solution.

In step 2), the mixed solution is heated to 60°C to 90°C, an initiating agent is added, and a reaction temperature is kept for 2 hours to 10 hours to obtain a semi-finished product.

In step 3), phosphoric acid which is equal to the (methyl) acrylate monomer in mole is added into the semi-finished product for esterification at a temperature of 70°C for 3 hours to 6 hours and high-temperature dehydration to obtain a final product, which is namely the comb-shaped positive dispersing material with a molecular weight ranging from 10,000 g/mol to 60,000 g/mol.

In the above process, the solvent may be any one or more of N-methylpyrrolidone, N-ethylpyrrolidone and the like, and preferably, the solvent is the N-methylpyrrolidone. By calculation by a mass percentage, there are 20% to 40% of unsaturated cyclic monomer, 40% to 70% of unsaturated branched polyether and 10% to 20% of (methyl) acrylate monomer, a total of which is 100%. The unsaturated cyclic monomer may be any one or more of styrene, methylstyrene, vinylpyridine and N-vinylpyrrolidone. An initiator of the unsaturated branched polyether is any one of allyl alcohol, isobutylene alcohol, isopentenol and the like, a participating chain segment of the unsaturated branched polyether is a copolymer of ethylene oxide and propylene oxide, which may be one or more of allylalcohol polyoxyethylene (300) polyoxypropylene (200) ether, allylalcohol polyoxyethylene (500) polyoxypropylene (500) ether, isobutylene polyoxyethylene (500) polyoxypropylene (1000) ether, isobutylene polyoxyethylene (1000) polyoxypropylene (1500) ether, isopentenyl polyoxyethylene (1500) polyoxypropylene (2000) ether and isopentenyl polyoxyethylene (2500) polyoxypropylene (2500) ether, and a molecular weight of the unsaturated branched polyether ranges from 500 g/mol to 5,000 g/mol. The (meth) acrylate monomer is any one or more of hydroxyethyl methylacrylate, hydroxypropyl methacrylate, hydroxybutyl methacrylate, hydroxyethyl acrylate, hydroxypropyl acrylate, hydroxybutyl acrylate and the like. The initiating agent is an oil-soluble initiating agent, which may be one or more of azodiisobutyronitrile, azodiisoheptylnitrile, dibenzoyl peroxide and the like, preferably, the initiating agent is the azodiisobutyronitrile, and an amount of the initiating agent is 0.1% to 3% of a mass of a polymerizable monomer (the unsaturated cyclic monomer, the unsaturated branched polyether and the (methyl) acrylate monomer).

By the above technical solution, the obtained dispersing material has a good performance, and a viscosity of a slurry system can be significantly reduced by adding the dispersing material into the positive electrode slurry. Moreover, the viscosity of the slurry can be kept stable for a long time, thus laying a good foundation for subsequent electrode plate coating. A preparation process of a low-internal-resistance electrode plate which is flat and smooth in surface and free of cracking is as follows.

Firstly, a positive electrode slurry is prepared: 95 parts of lithium iron phosphate (LiFePO₄), 2 parts of conductive carbon black, 2 parts of polyvinylidene fluoride, 66 parts of N-methylpyrrolidone and 1 part of positive electrode dispersing material are uniformly mixed, and dispersed by a vacuum defoamer to obtain the slurry; subsequently, the slurry is poured on a spread plate machine for electrode plate coating to obtain an electrode plate with an areal density of 150 g/m² to 200 g/m²; and finally, a surface structure and an internal resistance of the electrode plate are tested. Thus, it can be known that the electrode plate is flat and smooth in surface, free of cracking and powder falling, and low in internal resistance.

In order to make the above objects, features and advantages of the present invention clearer and more understandable, technical solutions of the present invention are further described hereinafter with reference to embodiments. However, the present invention is not limited to the listed embodiments, but should also comprise any other commonly known changes within the scope of right claimed by the present invention.

"One embodiment" or "an embodiment" as used herein refers to a specific feature, structure or characteristic that can be included in at least one implementation of the present invention. "In one embodiment" appearing in different places in the specification do not all refer to the same embodiment, nor are they separate or selective embodiments mutually exclusive of other embodiments.

### Embodiment 1

This embodiment showed a preparation method of a comb-shaped positive electrode dispersing material according to the following steps.

In step 1), 1,000 g of N-methylpyrrolidone, 200 g of styrene, 700 g of allylalcohol polyoxyethylene (300) polyoxypropylene (200) ether and 100 g of hydroxyethyl methylacrylate were mixed to obtain a uniform mixed solution.

In step 2), the mixed solution was heated to 90°C, 5 g of initiating agent was added, and a reaction temperature was kept for 2 hours to obtain a semi-finished product.

In step 3), 75 g of phosphoric acid was added into the semi-finished product for esterification and high-temperature dehydration at 70°C for 3 hours to obtain a final product, which was namely the comb-shaped positive dispersing material.

A low-internal-resistance electrode plate which is flat and smooth in surface and free of cracking was prepared from the above comb-shaped positive dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone and 1 part of comb-shaped positive dispersing material were uniformly mixed, and fully dispersed for 4 hours by a vacuum defoamer; subsequently, the dispersed slurry was poured on a spread plate machine for electrode plate coating to obtain an electrode plate with an areal density of 150 g/m²; and subsequently, a surface structure and an internal resistance of the electrode plate were tested.

### Embodiment 2

This embodiment showed a preparation method of a comb-shaped positive electrode dispersing material according to the following steps.

In step 1), 1,000 g of N-methylpyrrolidone, 300 g of methylstyrene, 600 g of allylalcohol polyoxyethylene (500) polyoxypropylene (500) ether and 100 g of hydroxypropyl methacrylate were mixed to obtain a uniform mixed solution.

In step 2), the mixed solution was heated to 80°C, 15 g of initiating agent was added, and a reaction temperature was kept for 4 hours to obtain a semi-finished product.

In step 3), 68 g of phosphoric acid was added into the semi-finished product for esterification and high-temperature dehydration at 70°C for 4 hours to obtain a final product, which was namely the comb-shaped positive dispersing material.

A low-internal-resistance electrode plate with a smooth and crack-free surface was prepared from the above comb-shaped positive dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone and 1 part of comb-shaped positive dispersing material were uniformly mixed, and fully dispersed for 4 hours by a vacuum defoamer; subsequently, the dispersed slurry was poured on a spread plate machine for electrode plate coating to obtain an electrode plate with an areal density of 160g/m²; and subsequently, a surface structure and an internal resistance of the electrode plate were tested.

### Embodiment 3

This embodiment showed a preparation method of a comb-shaped positive electrode dispersing material according to the following steps.

In step 1), 1,000 g of N-methylpyrrolidone, 400 g of vinylpyridine, 500 g of isobutylene polyoxyethylene (500) polyoxypropylene (1000) ether and 100 g of hydroxybutyl methacrylate were mixed to obtain a uniform mixed solution.

In step 2), the mixed solution was heated to 80°C, 30 g of initiating agent was added, and a reaction temperature was kept for 10 hours to obtain a semi-finished product.

In step 3), 62 g of phosphoric acid was added into the semi-finished product for esterification and high-temperature dehydration at 70°C for 5 hours to obtain a final product, which was namely the comb-shaped positive dispersing material.

A low-internal-resistance electrode plate with a smooth and crack-free surface was prepared from the above comb-shaped positive dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone and 1 part of comb-shaped positive dispersing material were uniformly mixed, and fully dispersed for 4 hours by a vacuum defoamer; subsequently, the dispersed slurry was poured on a spread plate machine for electrode plate coating to obtain an electrode plate with an areal density of 170g/m²; and subsequently, a surface structure and an internal resistance of the electrode plate were tested.

### Embodiment 4

This embodiment showed a preparation method of a comb-shaped positive electrode dispersing material according to the following steps.

In step 1), 1,000 g of N-methylpyrrolidone, 400 g of N-vinylpyrrolidone, 400 g of isobutylene polyoxyethylene (1000) polyoxypropylene (1500) ether and 200 g of hydroxyethyl acrylate were mixed to obtain a uniform mixed solution.

In step 2), the mixed solution was heated to 70°C, 15 g of initiating agent was added, and a reaction temperature was kept for 8 hours to obtain a semi-finished product.

In step 3), 169 g of phosphoric acid was added into the semi-finished product for esterification and high-temperature dehydration at 70°C for 6 hours to obtain a final product, which was namely the comb-shaped positive dispersing material.

A low-internal-resistance electrode plate which is flat and smooth in surface and free of cracking was prepared from the above comb-shaped positive dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone and 1 part of comb-shaped positive dispersing material were uniformly mixed, and fully dispersed for 4 hours by a vacuum defoamer; subsequently, the dispersed slurry was poured on a spread plate machine for electrode plate coating to obtain an electrode plate with an areal density of 180g/m²; and subsequently, a surface structure and an internal resistance of the electrode plate were tested.

### Embodiment 5

This embodiment showed a preparation method of a comb-shaped positive electrode dispersing material according to the following steps.

In step 1), 1,000 g of N-methylpyrrolidone, 300 g of styrene, isopentenyl polyoxyethylene (1500) polyoxypropylene (2000) ether and 200 g of hydroxypropyl acrylate were mixed to obtain a uniform mixed solution.

In step 2), the mixed solution was heated to 80°C, 5 g of initiating agent was added, and a reaction temperature was kept for 6 hours to obtain a semi-finished product.

In step 3), 151 g of phosphoric acid was added into the semi-finished product for esterification and high-temperature dehydration at 70°C for 4 hours to obtain a final product, which was namely the comb-shaped positive dispersing material.

A low-internal-resistance electrode plate which is flat and smooth in surface and free of cracking was prepared from the above comb-shaped positive dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone and 1 part of comb-shaped positive dispersing material were uniformly mixed, and fully dispersed for 4 hours by a vacuum defoamer; subsequently, the dispersed slurry was poured on a spread plate machine for electrode plate coating to obtain an electrode plate with an areal density of 190g/m²; and subsequently, a surface structure and an internal resistance of the electrode plate were tested.

### Embodiment 6

This embodiment showed a preparation method of a comb-shaped positive electrode dispersing material according to the following steps.

In step 1), 1,000 g of N-methylpyrrolidone, 200 g of N-vinylpyrrolidone, 600 g of isopentenyl polyoxyethylene (2500) polyoxypropylene (2500) ether and 200 g of hydroxybutyl acrylate were mixed to obtain a uniform mixed solution.

In step 2), the mixed solution was heated to 90°C, 1 g of initiating agent was added, and a reaction temperature was kept for 4 hours to obtain a semi-finished product.

In step 3), 136 g of phosphoric acid was added into the obtained semi-finished product for esterification and high-temperature dehydration at 70°C for 6 hours to obtain a final product, which was namely the comb-shaped positive dispersing material.

A low-internal-resistance electrode plate which is flat and smooth in surface and free of cracking was prepared from the above comb-shaped positive dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone and 1 part of comb-shaped positive dispersing material were uniformly mixed, and fully dispersed for 4 hours by a vacuum defoamer; subsequently, the dispersed slurry was poured on a spread plate machine for electrode plate coating to obtain an electrode plate with an areal density of 200 g/m²; and subsequently, a surface structure and an internal resistance of the electrode plate were tested.

### Comparative Example 1

A preparation method of a positive electrode dispersing material comprised the following steps.

In step 1), 1,000 g of N-methylpyrrolidone, 500 g of styrene and 500 g of hydroxyethyl methylacrylate were mixed to obtain a uniform mixed solution.

In step 2), the mixed solution was heated to 90°C, 5 g of initiating agent was added, and a reaction temperature was kept for 2 hours.

In step 3), 377 g of phosphoric acid was added into the obtained semi-finished product for esterification and high-temperature dehydration at 70°C for 3 hours to obtain a final product, which was namely a positive electrode slurry dispersing material of a battery.

An electrode plate was prepared from the above dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone, 1 part of positive electrode slurry dispersing material of the battery and the like were uniformly mixed, and fully dispersed for 4 hours by a vacuum defoamer; subsequently, the dispersed slurry was poured on a spread plate machine for electrode plate coating to obtain an electrode plate with an areal density of 150g/m²; and finally, a surface structure and an internal resistance of the electrode plate were tested.

### Comparative Example 2

A preparation method of a positive electrode dispersing material comprised the following steps.

In step 1), 1,000 g of N-methylpyrrolidone and 1,000 g of polyethylene glycol (300) propylene glycol (200) methacrylate were mixed to obtain a uniform mixed solution.

In step 2), the mixed solution was heated to 90°C, 5 g of initiating agent was added, and a reaction temperature was kept for 2 hours to obtain a product, which was a positive electrode slurry dispersing material of a battery.

An electrode plate was prepared from the above dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone, 1 part of positive electrode slurry dispersing material of the battery and the like were uniformly mixed, and fully dispersed for 4 hours by a vacuum defoamer; subsequently, the dispersed slurry was poured on a spread plate machine for electrode plate coating to obtain an electrode plate with an areal density of 150g/m²; and subsequently, a surface structure and an internal resistance of the electrode plate were tested.

### Comparative Example 3

A preparation method of a positive electrode dispersing material comprised the following steps.

In step 1), 1,000 g of N-methylpyrrolidone, 300 g of styrene and 700 g of allylalcohol polyoxyethylene (300) polyoxypropylene (200) ether were mixed to obtain a uniform mixed solution.

In step 2), the mixed solution was heated to 90°C, 5 g of initiating agent was added, and a reaction temperature was kept for 2 hours to obtain a product, which was a positive electrode slurry dispersing material of a battery.

An electrode plate was prepared from the above dispersing material, and a preparation process was as follows: firstly, a positive electrode slurry was prepared: 95 parts of lithium iron phosphate (LiFePO₄), 2 parts of conductive carbon black, 2 parts of polyvinylidene fluoride, 66 parts of N-methylpyrrolidone, 1 part of positive electrode slurry dispersing material of the battery and the like were uniformly mixed, and fully dispersed for 4 hours by a vacuum defoamer; subsequently, the dispersed slurry was poured on a spread plate machine for electrode plate coating to obtain an electrode plate with an areal density of 150g/m²; and subsequently, a surface structure and an internal resistance of the electrode plate were tested.

### Comparative Example 4

A universal-type commercially available dispersing material is provided and used for dispersion of a positive electrode slurry and preparation and characterization of a positive electrode plate.

An electrode plate was prepared from the above commercially available dispersing material, and a preparation process was as follows.

Firstly, the positive electrode slurry was prepared: 95 parts of lithium iron phosphate (LiFePO₄), 2 parts of conductive carbon black, 2 parts of polyvinylidene fluoride, 66 parts of N-methylpyrrolidone, 1 part of commercially available dispersing material and the like were uniformly mixed, and fully dispersed for 4 hours by a vacuum defoamer; subsequently, the dispersed slurry was poured on a spread plate machine for electrode plate coating to obtain an electrode plate with an areal density of 150g/m²; and subsequently, a surface structure and an internal resistance of the electrode plate were tested.

Related tests on a molecular weight of the dispersing material, a viscosity of the positive electrode slurry, internal resistance of the positive electrode plate and a surface state of the electrode plate were as follows.

**Table 1**

| Sample | Molecular weight of dispersing material (g/mol) | Solid content (wt%) | Initial viscosity (mPa·s) | 72-hour biscosity (mPa·s) |
|---|---|---|---|---|
| Embodiment 1 | 32456 | 60 | 9450 | 10480 |
| Embodiment 2 | 15871 | 61 | 9550 | 10455 |
| Embodiment 3 | 10351 | 59 | 8955 | 9852 |
| Embodiment 4 | 25831 | 58 | 9250 | 10175 |
| Embodiment 5 | 45865 | 61 | 9756 | 10731 |
| Embodiment 6 | 59855 | 59 | 9350 | 10275 |
| Comparative Example 1 | 21345 | 58 | 16850 | 20246 |
| Comparative Example 2 | 27683 | 57 | 17520 | 21900 |
| Comparative Example 3 | 32816 | 59 | 14550 | 17485 |
| Comparative Example 4 | 21348 | 58 | 15808 | 19760 |

Firstly, the molecular weight of the dispersing material, the viscosity of the positive electrode slurry and the like were tested. With reference to Table 1, Table 1 is a test table of the molecular weights of the dispersing materials and the viscosities of the positive electrode slurries. Results in Table 1 show that a dispersing material with an expected molecular weight is obtained. By comparing the initial viscosities and the 72-hour viscosities of the slurries in the embodiments and the comparative examples, it can be concluded that the embodiments have a good dispersion effect and dispersion retention capacity, while the comparative examples generally have a high initial viscosity and a poor 72-hour viscosity. By comparing the embodiments with Comparative Example 1 and Comparative Example 2, it can be seen that the synthesized comb-shaped macromolecular structure is necessary, and copolymerization of unsaturated heterocyclic monomer alone or unsaturated polyether alone has no obvious viscosity reduction effect. By comparing the embodiments with Comparative Example 3, it can be seen that existence of phosphate is also conductive to viscosity reduction and viscosity maintenance of the slurry. By comparing the embodiments with Comparative Example 4, it can be seen that the viscosities of the slurries in the embodiments are obviously better than that of the commercially available dispersing material.

Secondly, surface states of the positive electrode plates obtained in Embodiments 1 to 6 and Comparative Examples 1 to 4 are observed by a microscope and photographed, so as to compare a difference between the samples. With reference to FIG. 1, FIG. 1 shows pictures of surfaces of the electrode plates prepared in Embodiments 1 to 6 and Comparative Examples 1 to 4 by the preparation method of the low-internal-resistance electrode plate according to the present invention. As shown in FIG. 1, the surfaces of the positive electrode plates in Embodiments 1 to 6 involved in the present invention are flat and smooth in surface and free of cracking and powder falling, while the surfaces of the positive electrode plates in Comparative Examples 1 to 4 have more or less cracking or surface non-uniformity.

Finally, the internal resistances of the positive electrode plates are tested, and the internal resistances of the positive electrode plates in Embodiments 1 to 6 and Comparative Examples 1 to 4 are compared. With reference to Table 2, Table 2 is a test table of the internal resistances of the electrode plates in Embodiments 1 to 6 and Comparative Examples 1 to 4. It can be seen from Table 2 that the internal resistances of the electrode plates in Embodiments 1 to 6 are obviously lower than those in Comparative Examples 1 to 4, so that the advantage of low internal resistance is achieved. By comparing the embodiments with Comparative examples 1 to 2, it can be seen that the comb-shaped macromolecular structure is necessary, and a polyether monomer alone or copolymerization of heterocyclic monomer alone has no internal resistance reduction effect. By comparing the embodiments with Comparative Example 3, it can be seen that phosphate also has the internal resistance reduction effect. By comparing the embodiments with Comparative Example 4, it can be seen that the internal resistance reduction effects in the embodiments involved in the present invention are obviously better than that of the commercially available dispersing material.

**Table 2**

| Sample | Areal density of electrode plate (g/m²) | Internal resistance of electrode plate (mΩ) |
|---|---|---|
| Embodiment 1 | 150 | 540 |
| Embodiment 2 | 160 | 525 |
| Embodiment 3 | 170 | 495 |
| Embodiment 4 | 180 | 516 |
| Embodiment 5 | 190 | 538 |
| Embodiment 6 | 200 | 519 |
| Comparative Example 1 | 150 | 635 |
| Comparative Example 2 | 150 | 755 |
| Comparative Example 3 | 150 | 695 |
| Comparative Example 4 | 150 | 720 |

It should be noted that, the embodiments above are only used to illustrate the technical solutions of the present invention, and are not intended to limit the present invention.

## Claims

1. A preparation method of a comb-shaped positive electrode dispersing material, comprising the following steps of: (1) mixing a solvent, an unsaturated cyclic monomer, unsaturated branched polyether and a (methyl) acrylate monomer to obtain a mixed solution, wherein the solvent is any one or two of N-methylpyrrolidone and N-ethylpyrrolidone; the unsaturated cyclic monomer is any one or more of styrene, methylstyrene, vinylpyridine and N-vinylpyrrolidone; an initiator of the unsaturated branched polyether is any one of allyl alcohol, isobutylene alcohol and isopentenol, a participating chain segment of the unsaturated branched polyether is a copolymer of ethylene oxide and propylene oxide, a molecular weight of the unsaturated branched polyether ranges from 500 g/mol to 5,000 g/mol, and the (meth) acrylate monomer is any one or more of hydroxyethyl methylacrylate, hydroxypropyl methacrylate, hydroxybutyl methacrylate, hydroxyethyl acrylate, hydroxypropyl acrylate and hydroxybutyl acrylate; (2) heating the mixed solution to a reaction temperature, adding an initiating agent, and keeping the reaction temperature for reaction to obtain a semi-finished product; and (3) adding phosphoric acid which is equal to the (methyl) acrylate monomer in mole into the semi-finished product for esterification and high-temperature dehydration to obtain the comb-shaped positive dispersing material.

2. The preparation method of the comb-shaped positive electrode dispersing material according to claim 1, wherein, in the step (1), a mass ratio of the unsaturated cyclic monomer to the unsaturated branched polyether and the (methyl) acrylate monomer is 2 to 4: 4 to 7: 1 to 2.

3. The preparation method of the comb-shaped positive electrode dispersing material according to claim 1, wherein, in the step (2), the initiating agent is any one or more of azodiisobutyronitrile, azodiisoheptylnitrile and dibenzoyl peroxide; and according to a mass percentage, an amount of the initiating agent accounts for 0.1% to 3% of a sum of amounts of the unsaturated cyclic monomer, the unsaturated branched polyether and the (methyl) acrylate monomer.

4. The preparation method of the comb-shaped positive electrode dispersing material according to claim 1, wherein, in the step (2), the reaction temperature is 60°C to 90°C, and the reaction lasts for 2 hours to 10 hours.

5. The preparation method of the comb-shaped positive electrode dispersing material according to claim 1, wherein, in the step (3), the esterification is carried out at a temperature of 70°C, and the esterification lasts for 3 hours to 6 hours.

6. The preparation method of the comb-shaped positive electrode dispersing material according to claim 1, wherein, in the step (3), a molecular weight of the comb-shaped positive electrode dispersing material ranges from 10,000 g/mol to 60,000 g/mol.

7. A preparation method of a low-internal-resistance electrode plate, comprising the following steps of: (1) uniformly mixing the comb-shaped positive electrode dispersing material prepared by the preparation method of the comb-shaped positive electrode dispersing material according to any one of claims 1 to 6, lithium iron phosphate, conductive carbon black, polyvinylidene fluoride and N-methylpyrrolidone, and dispersing the mixture by a vacuum defoamer to obtain a positive electrode slurry; and (2) pouring the positive electrode slurry on a spread plate machine for electrode plate coating to obtain the low-internal-resistance electrode plate.

8. The preparation method of the low-internal-resistance electrode plate according to claim 7, wherein, in the step (1), a mass ratio of the lithium iron phosphate to the conductive carbon black, the polyvinylidene fluoride, the N-methylpyrrolidone and the comb-shaped positive electrode dispersing material is 95: 2: 2: 66: 1.

9. The preparation method of the low-internal-resistance electrode plate according to claim 7, wherein, in the step (2), an areal density of the low-internal-resistance electrode plate ranges from 150 g/m² to 200 g/m².

## Patentansprüche

1. Herstellungsverfahren für ein kammförmiges Positivelektrodendispersionsmaterial, umfassend die folgenden Schritte: (1) Mischen eines Lösungsmittels, eines ungesättigten cyclischen Monomers, eines ungesättigten verzweigten Polyethers und eines (Methyl)acrylatmonomers, um eine gemischte Lösung zu erhalten, wobei das Lösungsmittel eines oder zwei von N-Methylpyrrolidon und N-Ethylpyrrolidon ist; das ungesättigte cyclische Monomer eines oder mehrere von Styrol, Methylstyrol, Vinylpyridin und N-Vinylpyrrolidon ist; ein Initiator des ungesättigten verzweigten Polyethers eines von Allylalkohol, Isobutylenalkohol und Isopentenol ist, ein teilnehmendes Kettensegment des ungesättigten verzweigten Polyethers ein Copolymer aus Ethylenoxid und Propylenoxid ist, ein Molekulargewicht des ungesättigten verzweigten Polyethers im Bereich von 500 g/mol bis 5.000 g/mol liegt und das (Meth)acrylatmonomer eines oder mehrere von Hydroxyethylmethylacrylat, Hydroxypropylmethacrylat, Hydroxybutylmethacrylat, Hydroxyethylacrylat, Hydroxypropylacrylat und Hydroxybutylacrylat ist; (2) Erwärmen der gemischten Lösung auf eine Reaktionstemperatur, Hinzufügen eines Initiierungsmittels und Beibehalten der Reaktionstemperatur für eine Reaktion, um ein Halbfertigprodukt zu erhalten; und (3) Hinzufügen von Phosphorsäure, die dem (Methyl)acrylatmonomer den Mol nach gleich ist, in das Halbfertigprodukt zur Veresterung und Hochtemperaturentwässerung, um das kammförmige Positivdispersionsmaterial zu erhalten.

2. Herstellungsverfahren für das kammförmige Positivelektrodendispersionsmaterial nach Anspruch 1, wobei in dem Schritt (1) ein Massenverhältnis des ungesättigten cyclischen Monomers zu dem ungesättigten verzweigten Polyether und dem (Methyl)acrylatmonomer 2 bis 4:4 bis 7:1 bis 2 beträgt.

3. Herstellungsverfahren für das kammförmige Positivelektrodendispersionsmaterial nach Anspruch 1, wobei in dem Schritt (2) das Initiierungsmittel eines oder mehrere von Azodiisobutyronitril, Azodiisoheptylnitril und Dibenzoylperoxid ist; und gemäß einem Massenprozentsatz eine Menge des Initiierungsmittels 0,1 % bis 3 % einer Summe von Mengen des ungesättigten cyclischen Monomers, des ungesättigten verzweigten Polyethers und des (Methyl)acrylatmonomers ausmacht.

4. Herstellungsverfahren für das kammförmige Positivelektrodendispersionsmaterial nach Anspruch 1, wobei in dem Schritt (2) die Reaktionstemperatur 60 °C bis 90 °C beträgt und die Reaktion 2 Stunden bis 10 Stunden dauert.

5. Herstellungsverfahren für das kammförmige Positivelektrodendispersionsmaterial nach Anspruch 1, wobei in dem Schritt (3) die Veresterung bei einer Temperatur von 70 °C durchgeführt wird und die Veresterung 3 Stunden bis 6 Stunden dauert.

6. Herstellungsverfahren für das kammförmige Positivelektrodendispersionsmaterial nach Anspruch 1, wobei in dem Schritt (3) ein Molekulargewicht des kammförmigen Positivelektrodendispersionsmaterials im Bereich von 10.000 g/mol bis 60.000 g/mol liegt.

7. Herstellungsverfahren für eine Elektrodenplatte mit niedrigem internen Widerstand, umfassend die folgenden Schritte: (1) gleichmäßiges Mischen des kammförmigen Positivelektrodendispersionsmaterials, das durch das Herstellungsverfahren für das kammförmige Positivelektrodendispersionsmaterial nach einem der Ansprüche 1 bis 6 hergestellt wurde, von Lithiumeisenphosphat, Leitfähigkeitsruß, Polyvinylidenfluorid und N-Methylpyrrolidon und Dispergieren der Mischung durch einen Vakuumentschäumer, um eine Positivelektrodenaufschlämmung zu erhalten; und (2) Gießen der Positivelektrodenaufschlämmung auf eine Streichplattenmaschine zum Beschichten der Elektrodenplatte, um die Elektrodenplatte mit niedrigem internen Widerstand zu erhalten.

8. Herstellungsverfahren für die Elektrodenplatte mit niedrigem internen Widerstand nach Anspruch 7, wobei in dem Schritt (1) ein Massenverhältnis des Lithiumeisenphosphats zu dem Leitfähigkeitsruß, dem Polyvinylidenfluorid, dem N-Methylpyrrolidon und dem kammförmigen Positivelektrodendispersionsmaterial 95:2:2:66:1 beträgt.

9. Herstellungsverfahren für die Elektrodenplatte mit niedrigem internen Widerstand nach Anspruch 7, wobei in dem Schritt (2) eine Flächendichte der Elektrodenplatte mit niedrigem internen Widerstand im Bereich von 150 g/m² bis 200 g/m² liegt.

## Revendications

1. Procédé de préparation d'un matériau de dispersion d'électrode positive en forme de peigne, comprenant les étapes suivantes de : (1) mélange d'un solvant, d'un monomère cyclique insaturé, d'un polyéther ramifié insaturé et d'un monomère d'acrylate de méthyle pour obtenir une solution mixte, ledit solvant étant l'un quelconque ou deux parmi la N-méthylpyrrolidone et la N-éthylpyrrolidone ; ledit monomère cyclique insaturé étant l'un quelconque ou plusieurs parmi le styrène, le méthylstyrène, la vinylpyridine et la N-vinylpyrrolidone ; un initiateur du polyéther ramifié insaturé étant l'un quelconque parmi l'alcool allylique, l'alcool d'isobutylène et l'isopenténol, un segment de chaîne participant du polyéther ramifié insaturé étant un copolymère d'oxyde d'éthylène et d'oxyde de propylène, un poids moléculaire du polyéther ramifié insaturé variant de 500 g/mol à 5 000 g/mol, et ledit monomère méthacrylate étant l'un quelconque ou plusieurs parmi l'acrylate d'hydroxyéthyle méthyle, le méthacrylate d'hydroxypropyle, le méthacrylate d'hydroxybutyle, l'acrylate d'hydroxyéthyle, l'acrylate d'hydroxypropyle et l'acrylate d'hydroxybutyle ; (2) chauffage de la solution mixte à une température de réaction, ajout d'un agent d'amorçage, et maintien de la température de réaction en vue d'une réaction pour obtenir un produit semi-fini ; et (3) ajout d'acide phosphorique qui est égal au monomère acrylate de méthyle en mole dans le produit semi-fini pour l'estérification et une déshydratation à haute température pour obtenir le matériau de dispersion positive en forme de peigne.

2. Procédé de préparation du matériau de dispersion d'électrode positive en forme de peigne selon la revendication 1, à l'étape (1), un rapport massique du monomère cyclique insaturé par rapport au polyéther ramifié insaturé et au monomère acrylate de méthyle étant de 2 à 4: 4 à 7: 1 à 2.

3. Procédé de préparation du matériau de dispersion d'électrode positive en forme de peigne selon la revendication 1, à l'étape (2), ledit agent d'amorçage étant un ou plusieurs parmi l'azodiisobutyronitrile, l'azodiisoheptylnitrile et le peroxyde de dibenzoyle ; et selon un pourcentage massique, une quantité de l'agent d'amorçage représentant 0,1 % à 3 % d'une somme de quantités du monomère cyclique insaturé, du polyéther ramifié insaturé et du monomère acrylate de méthyle.

4. Procédé de préparation du matériau de dispersion d'électrode positive en forme de peigne selon la revendication 1, à l'étape (2), ladite température de réaction étant 60°C à 90°C, et ladite réaction durant de 2 heures à 10 heures.

5. Procédé de préparation du matériau de dispersion d'électrode positive en forme de peigne selon la revendication 1, à l'étape (3), l'estérification étant effectuée à une température de 70°C, et ladite estérification durant 3 heures à 6 heures.

6. Procédé de préparation du matériau de dispersion d'électrode positive en forme de peigne selon la revendication 1, à l'étape (3), un poids moléculaire du matériau de dispersion d'électrode positive en forme de peigne allant de 10 000 g/mol à 60 000 g/mol.

7. Procédé de préparation d'une plaque d'électrode à faible résistance interne, comprenant les étapes suivantes de : (1) mélange uniforme du matériau de dispersion d'électrode positive en forme de peigne préparé à l'aide du procédé de préparation du matériau de dispersion d'électrode positive en forme de peigne selon l'une quelconque des revendications 1 à 6, du phosphate de fer et de lithium, du noir de carbone conducteur, du poly(fluorure de vinylidène) et de la N-méthylpyrrolidone, et dispersion du mélange à l'aide d'un agent antimousse sous vide pour obtenir une suspension épaisse d'électrode positive ; et (2) versage de la suspension épaisse d'électrode positive sur une machine à plaque étalée pour le revêtement de la plaque d'électrode afin d'obtenir la plaque d'électrode à faible résistance interne.

8. Procédé de préparation de la plaque d'électrode à faible résistance interne selon la revendication 7, à l'étape (1), un rapport massique du phosphate de fer et de lithium par rapport au noir de carbone conducteur, au poly(fluorure de vinylidène), à la N-méthylpyrrolidone et au matériau de dispersion d'électrode positive en forme de peigne étant de 95: 2: 2: 66: 1.

9. Procédé de préparation de la plaque d'électrode à faible résistance interne selon la revendication 7, à l'étape (2), une densité surfacique de la plaque d'électrode à faible résistance interne allant de 150 g/m² à 200 g/m².
